# EUROPEAN PATENT APPLICATION

(11) **EP 3 203 415 A1**
(43) Date of publication of application: **09.08.2017**
(21) Application number: 17152406.9
(22) Date of filing: 20.01.2017
(51) Int. Cl.: G06K 9/00

(54) **BIOMETRIC AUTHENTICATION DEVICE, BIOMETRIC AUTHENTICATION METHOD AND BIOMETRIC AUTHENTICATION PROGRAM**

(30) Priority: 04.02.2016 JP 2016020228
(71) Applicant: FUJITSU LIMITED, Kawasaki-shi Kanagawa 211-8588 (JP)
(72) Inventor: Uno, Kazuya, Kanagawa, 211-8588 (JP)
(74) Representative: Hoffmann Eitle

(57) **Abstract**

A biometric authentication device includes: a storage to store enrollment biometric information associated with a category having a relation with a feature of biometric information; a determiner to determine the category of biometric information; a comparer configured to compare input biometric information with each enrollment biometric information that is associated with a category determined by the determiner with respect to the input biometric information; and an associator to, when a first comparison by the comparer between the input biometric information and the each enrollment biometric information is failed and a second comparison by the comparer between each enrollment biometric information that is associated with a category determined by the determiner with respect to re-input biometric information and the re-input biometric information is succeeded, associate the each enrollment biometric information having achieved a success of the second comparison with the category determined with respect to the input biometric information.

## Description

### FIELD

A certain aspect of embodiments described herein relates to a biometric authentication device, a biometric authentication method and a biometric authentication program.

### BACKGROUND

It takes a long time to perform an authentication process in a 1:N authentication in which biometric information for comparison is compared with a plurality of (N number of) enrollment biometric information. And so, there is used a technology in which enrollment biometric information is categorized into a plurality of categories, and the number of enrollment biometric information for comparison is reduced (for example, see Japanese Patent Application Publication No. 2006-72429).

### SUMMARY

The present invention has been made in view of those circumstances, and an object thereof is to provide a biometric authentication device, a biometric authentication method and a biometric authentication program that are capable of speeding up an authentication process.

According to an aspect of the present invention, there is provided a biometric authentication device including: a storage configured to store enrollment biometric information associated with a category having a relation with a feature of biometric information; a determiner configured to determine the category of biometric information input in a biometric sensor; a comparer configured to compare input biometric information input in the biometric sensor with each enrollment biometric information that is associated with a category determined by the determiner with respect to the input biometric information and stored in the storage; and an associator configured to, when a first comparison by the comparer between the input biometric information and the each enrollment biometric information is failed and a second comparison by the comparer between each enrollment biometric information that is associated with a category determined by the determiner with respect to re-input biometric information re-input in the biometric sensor and is stored in the storage and the re-input biometric information is succeeded, associate the each enrollment biometric information having achieved a success of the second comparison with the category determined with respect to the input biometric information.

### BRIEF DESCRIPTION OF DRAWINGS

FIG. 1A illustrates a block diagram of a hardware structure of a biometric authentication device in accordance with a first embodiment;
FIG. 1B illustrates a block diagram of each function achieved by an execution of a biometric authentication program;
FIG. 2 illustrates a flowchart executed by each unit of a biometric authentication device in an enrollment process;
FIG. 3 illustrates a category table stored in a storage;
FIG. 4 illustrates a flowchart executed by each unit by a biometric authentication device in an authentication process;
FIG. 5A illustrates an image diagram of Step S11 to Step S 15;
FIG. 5B illustrates an image diagram of Step S19 to Step S23;
FIG. 5C illustrates a table after updating;
FIG. 6 illustrates a flowchart of another authentication process;
FIG. 7A illustrates a category table before deleting enrollment feature;
FIG. 7B illustrates a comparison frequency table;
FIG. 7C illustrates a category table after updating; and
FIG. 8 illustrates a flowchart of another authentication process.

### DESCRIPTION OF EMBODIMENTS

When enrollment biometric information is categorized into categories, biometric information input from a biometric sensor may be erroneously categorized into a category that is different from a category of a user (binning error). When re-tries are performed until the biometric information is compared with desirable enrollment biometric information, it takes a long time to perform an authentication process.

The following is a description of embodiments, with reference to the accompanying drawings.

### [First Embodiment]

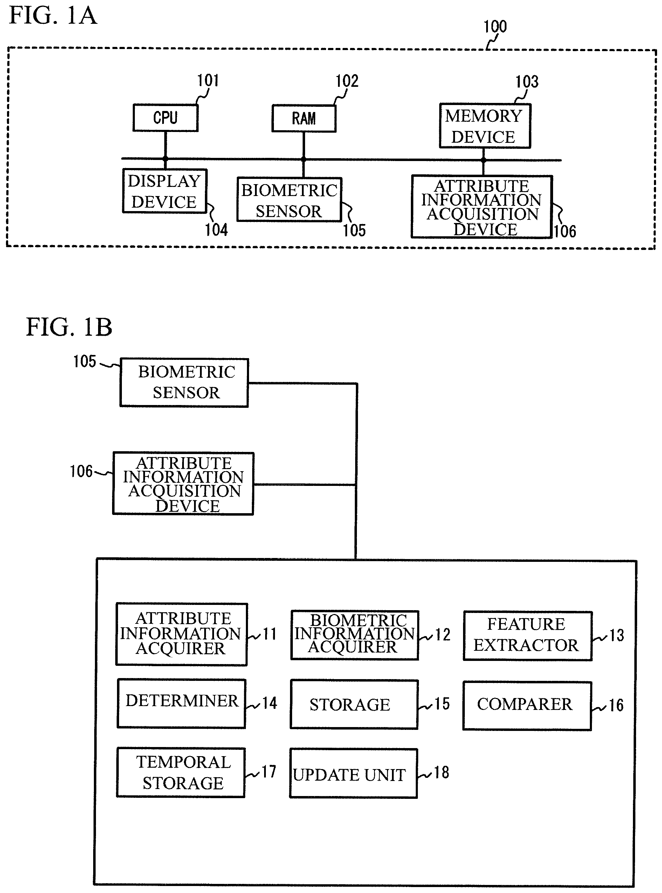

FIG. 1A illustrates a hardware structure of a biometric authentication device 100 in accordance with a first embodiment. As illustrated in FIG. 1A, the biometric authentication device 100 has a CPU 101, a RAM (Random Access Memory) 102, a memory device 103, a display device 104, a biometric sensor 105, an attribute information acquisition device 106 and so on. These components are coupled to each other with a bus or the like.

The CPU 101 is a central processing unit. The CPU 101 includes one or more core. The RAM 102 is a volatile memory temporally storing a program executed by the CPU 101, a data processed by the CPU 101, and so on.

The memory device 103 is a nonvolatile memory device. The memory device 103 may be a SSD (Solid State Drive) such as a ROM (Read Only Memory) or a flash memory, or a hard disk driven by a hard disk drive. The memory device 103 stores a biometric authentication program in accordance with the first embodiment.

The display device 104 is such as a liquid crystal display, an electroluminescence panel or the like. The display device 104 shows a result of each process described later. A report device may be provided in order to report an authentication result to an OS, an application or another device via network.

The biometric sensor 105 is a sensor for acquiring biometric information of a user. A modality of the biometric information is such as a face, a vein, a fingerprint, an iris or the like. In the embodiment, the fingerprint is used as the biometric information as an example. When the fingerprint is used as the biometric information, the biometric sensor 105 is an optical sensor, a capacitance sensor or the like and captures a fingerprint image of a user. The attribute information acquisition device 106 acquires an attribute of the biometric information acquired by the biometric sensor 105. The attribute information acquisition device 106 is a mouse, a keyboard, a touch panel or the like. The attribute information is a user ID, a type of finger or the like.

A biometric authentication program stored in the memory device 103 is developed to the RAM 102. The CPU 101 executes the biometric authentication program developed to the RAM 102. Thus, each part of the biometric authentication device 100 is achieved. By the execution of the biometric authentication program, an enrollment process, an authentication process and so on are performed.

In the enrollment process, biometric information input to the biometric sensor 105 or a biometric feature extracted from biometric information is associated to each user and is enrolled in a database as an enrollment feature. In the authentication process, when a similarity between biometric information input to the biometric sensor 105 or a biometric feature extracted from biometric information and an enrollment biometric feature is equal to or more than a threshold, it is determined that a user is the same as an enrolled user. Details of each process will be described later.

FIG. 1B illustrates a block diagram of each function achieved by the execution of the biometric authentication program. As illustrated in FIG. 1B, an attribute information acquirer 11, a biometric information acquirer 12, a feature extractor 13, a determiner 14, a storage 15, a comparer 16, a temporal storage 17, an update unit 18 and so on are achieved by the execution of the biometric authentication program.

The attribute information acquirer 11 acquires attribute information that a user input in the attribute information acquisition device 106. The biometric information acquirer 12 acquires biometric information that is input in the biometric sensor 105. In the embodiment, the biometric information acquirer 12 acquires an image captured by the biometric sensor 105 as the biometric information. The feature extractor 13 is a process unit for extracting a feature from the biometric information acquired by the biometric information acquirer 12. In the embodiment, a fingerprint is used as the biometric information. A minutia is used as the biometric feature. In this case, the feature is such as an edge point of a ridge line, a branch point at which a ridge line branches, a center point of a fingerprint, a delta point of three ridge lines, or association among them.

The determiner 14 determines which category the feature extracted by the feature extractor 13 belongs to, based on the feature or the biometric information acquired by the biometric information acquirer 12. The category is a category on which the biometric information influences. When the fingerprint is used as the biometric information, categories may include a left loop, a whorl and so on. For example, the category is determined with use of a position association of a center point or a delta of a fingerprint, a direction of a ridge line, and so on.

The storage 15 relates an ID for identifying a user with an enrollment feature , a category of the enrollment feature and so on, and stores the ID, the enrollment feature and the category. The comparer 16 compares a feature for comparison extracted by the feature extractor 13 with the enrollment feature stored in the storage 15 in the authentication process. For example, the comparer 16 calculates a similarity between the feature for comparison and the enrollment feature. When the similarity calculated by the comparer 16 is equal to or more than a threshold, the comparison is succeeded. When the similarity is less than the threshold, the comparison is failed. The enrollment feature belonging to a category into which the biometric information acquired by the biometric information acquirer 12 is categorized is selected as the object for comparison in the authentication process.

The temporal storage 17 temporarily stores the category of the feature for comparison that is failed in the comparison. When the comparison of the feature for comparison extracted from the biometric information acquired by the biometric information acquirer 12 again is succeeded, the update unit 18 relates the enrollment feature used in the comparison with the category stored by the temporal storage 17 and stores the enrollment feature and the category. A description will be given of details of the enrollment process and the authentication process.

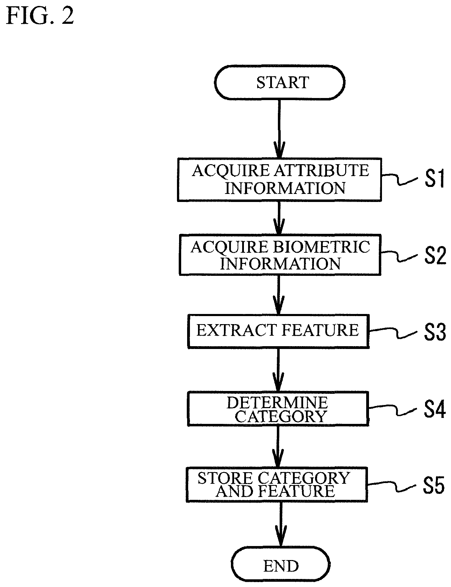

(Enrollment process) FIG. 2 illustrates an example of a flowchart of processes executed by each unit of the biometric authentication device 100 in the enrollment process. A description will be given of the process of each unit based on the flowchart of FIG. 2. The attribute information acquirer 11 acquires attribute information that is input in the attribute information acquisition device 106 by a user (Step S1). Next, the biometric information acquirer 12 acquires biometric information that is input in the biometric sensor 105 (Step S2). Next, the feature extractor 13 extracts an enrollment feature from the biometric information acquired in Step S2 (Step S3).

Next, the determiner 14 determines a category of the enrollment feature extracted in Step S3 based on the enrollment feature or the biometric information acquired in Step S2 (Step S4). When the fingerprint acquired by the biometric sensor 105 has a finger print of a left loop, the enrollment feature is categorized into a left loop. Next, the storage 15 relates the attribute information acquired in Step S1 and the enrollment feature extracted in Step S3 with the category determined in Step S4 and stores the attribute information, the enrollment feature and the category (Step S5).

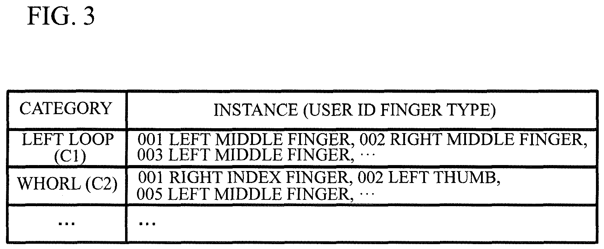

FIG. 3 illustrates a table stored in the storage 15. As illustrated in FIG. 3, the user ID, a type of fingers and categories (C1, C2, ...) are associated with each other and are stored. The user ID and the type of fingers are associated with the enrollment feature.

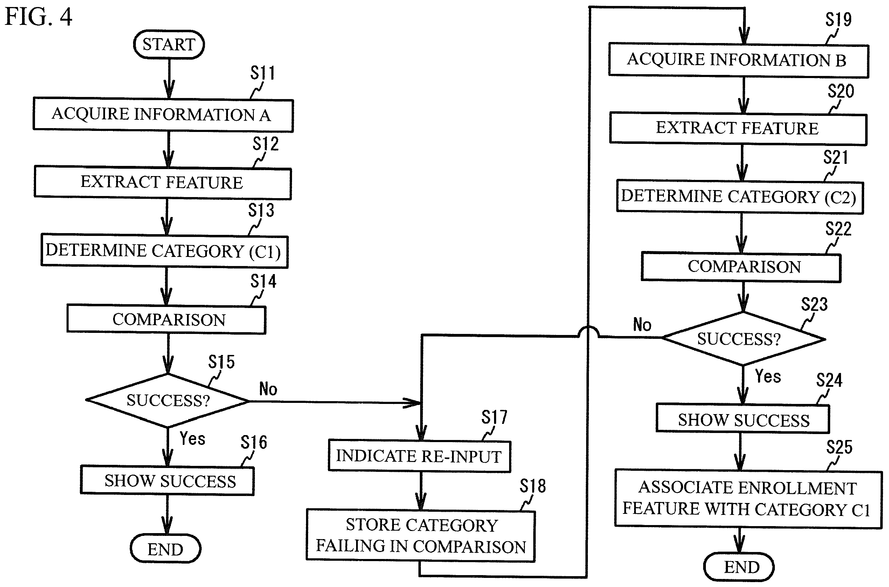

(Authentication process) FIG. 4 illustrates an example of a flowchart of processes executed by each unit of the biometric authentication device 100 in the authentication process. A description will be given of the process of each unit based on the flowchart of FIG. 4. The biometric information acquirer 12 acquires biometric information A that is input in the biometric sensor 105 (Step S11). Next, the feature extractor 13 extracts a feature for comparison from the biometric information A acquired in Step S11 (Step S12).

Next, the determiner 14 determines a category to which the feature for comparison extracted in Step S12 belongs, based on the feature for comparison extracted in Step S12 or the biometric information A acquired in Step S11 (Step S 13). A category determined in Step S13 is a category C1. Next, the comparer 16 compares the feature for comparison with the enrollment feature that is stored in the storage 15 and belongs to the category C1 (Step S 14). Next, the comparer 16 determines whether the comparison between the enrollment feature of the category C1 and the feature for comparison is succeeded (Step S 15). In concrete, it is determined whether a similarity between the feature for comparison and any enrollment feature of the category C1 is equal to or more than a threshold.

When it is determined as "Yes" in Step S 15, the comparer 16 makes the display device 104 show information of success of the comparison (Step S16). After Step S16, the flowchart is terminated. When it is determined as "No" in Step S15, the comparer 16 makes the display device 104 show information of failure of the comparison and makes the display device 104 show a message for promoting re-inputting of biometric information (Step S17). Next, the temporal storage 17 temporarily stores the category that failed the comparison (Step S18). In the example of FIG. 2, the category C1 is temporarily stored.

Next, the biometric information acquirer 12 acquires biometric information B that is re-input in the biometric sensor 105 (Step S 19). Next, the feature extractor 13 extracts a feature for comparison from the biometric information acquired in Step S19 (Step S20). Next, the determiner 14 determines a category to which the feature for comparison belongs, based on the biometric information B acquired in Step S 19 or the feature for comparison extracted in Step S20 (Step S21). A category determined in Step S21 is a category C2. According to inputting condition of biometric body by the user, the category C2 may be different from the category C1 or may be the same as the category C1.

Next, the comparer 16 compares an enrollment feature belonging to the category C2 and the feature for comparison (Step S22). Next, the comparer 16 determines whether the comparison between the enrollment feature of the category C2 and the feature for comparison is succeeded (Step S23). In concrete, it is determined whether any of the enrollment features of the category C2 and the feature for comparison is equal to or more than a threshold. When it is determined as "No" in Step S23, Step S17 is executed again. When it is determined as "Yes" in Step S23, the comparer 16 makes the display device 104 show information of success of the comparison (Step S24). Next, the update unit 18 relates the enrollment feature having achieved the success of the comparison in Step S22 (of which similarity is equal to or more than the threshold) with the category C1 stored in the temporal storage 17 (Step S25). After that, the flowchart is terminated.

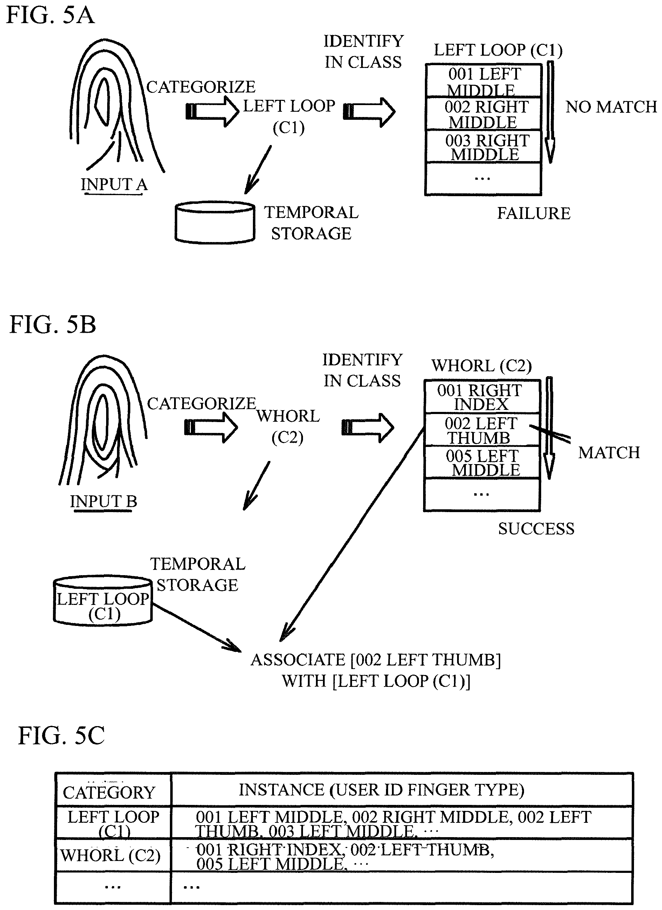

FIG. 5A illustrates an image of Step S11 to Step S15. As illustrated in FIG. 5A, the category to which the feature for comparison extracted in Step S12 belongs, based on the biometric information A acquired in Step S11 or the feature for comparison. In the example of FIG. 5A, the feature for comparison is categorized into the left loop. Next, the feature for comparison is compared with n1 number of enrollment features belonging to the category C1 in order (1:n authentication). When the comparison is failed, the category C1 is stored in the temporal storage 17.

FIG. 5B illustrates an image of Step S19 to Step S23. As illustrated in FIG. 5B, the category to which the feature comparison extracted in Step S20 belongs is determined, based on the biometric information B acquired in Step S 19 or the feature for comparison. In the example of FIG. 5B, the feature for comparison is categorized in the category C2 of whorl. Next, the feature for comparison is compared with n2 number of enrollment feature belonging to the category C2 (1:n authentication). When the comparison is succeeded, the enrollment feature is associated with the category C1 stored in the temporal storage 17. FIG. 5C illustrates a table after updating. As illustrated in FIG. 5C, the enrollment feature of 002_left thumb newly belongs to the category C1 of left loop.

In the embodiment, the feature for comparison extracted from the biometric information input in the biometric sensor 105 is compared with the enrollment feature of the category to which the biometric information belongs. Thus, the authentication process is speeded up, compared to the case where the feature for comparison is compared with all enrollment feature stored in the storage 15. When the feature for comparison extracted from the biometric information that is re-input in a case where the comparison is failed is successfully compared with the enrollment feature belonging to the category of the biometric information, the enrollment feature having achieved the success of the comparison is associated with the determined category. In this case, the enrollment feature to be compared belongs to the category having possibility of erroneous determination (binning error). Therefore, even if the category is erroneously determined, a time for comparing the feature for comparison with the enrollment feature to be accurately compared is reduced. That is, the authentication process is speeded up.

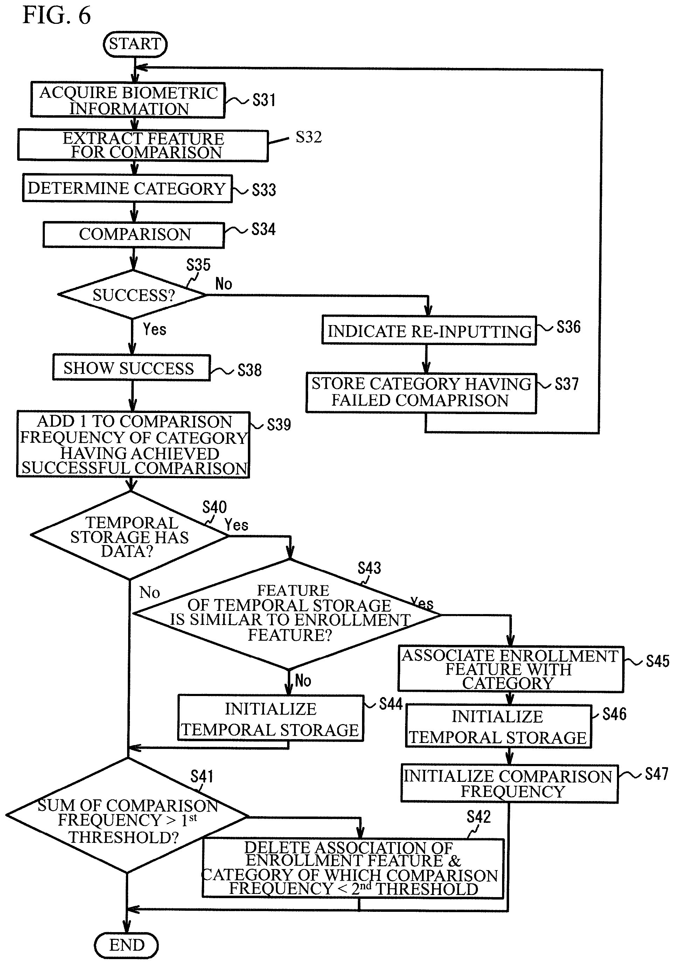

(First modified embodiment) FIG. 6 illustrates another example of the flowchart of the authentication process. A description will be given of the process of each unit based on the flowchart of FIG. 6. The biometric information acquirer 12 acquires biometric information from the biometric sensor 105 (Step S31). Next, the feature extractor 13 extracts a feature for comparison from the biometric information acquired in Step S31 (Step S32).

Next, the determiner 14 determines a category to which the feature for comparison extracted in Step S32 belongs, based on the biometric information acquired in Step S31 or the feature for comparison (Step S33). Next, the comparer 16 compares the feature for comparison with enrollment feature belonging to the category determined in Step S33 (Step S34). Next, the comparer 16 determines whether the feature for comparison is successfully compared with the enrollment feature of the category (Step S35). In concrete, it is determined whether a similarity between the feature for comparison and any of enrollment feature of the category is equal to or more than a threshold.

When it is determined as "No" in Step S35, the comparer 16 makes the display device 104 show information of failure of the comparison, and makes the display device 104 show a message for promoting re-inputting of biometric information (Step S36). And, the temporal storage 17 temporarily stores the category determined in Step S33 and the feature for comparison extracted in Step S32 (Step S37). After that, Step S31 is executed again.

When it is determined as "Yes" in Step S35, the comparer 16 makes the display device 104 show information of success of the comparison (Step S38). Next, the update unit 18 adds 1 to a comparison frequency of the category having achieved the success of the comparison, with respect to the enrollment feature having achieved the success of the comparison (Step S39). Next, the update unit 18 determines whether the temporal storage 17 stores data (Step S40). That is, it is determined whether the temporal storage 17 stores a category and a feature for comparison.

When it is determined as "No" in Step S40, the update unit 18 determines whether a sum of the comparison frequency of each category with respect to the enrollment feature having achieved the success of the comparison is more than a first threshold (Step S41). When it is determined as "No" in Step S41, the execution of the flowchart is terminated. When it is determined as "Yes" in Step S41, the update unit 18 deletes the association between the enrollment feature and the category of which comparison frequency is less than a second threshold, with respect to the enrollment feature having achieved the success of the comparison (Step S42). After that, the execution of the flowchart is terminated. When there is no category of which comparison frequency is less than the second threshold in Step S42, the association between the category and the enrollment feature is not deleted.

When it is determined as "Yes" in Step S40, the update unit 18 determines whether a similarity between the feature for comparison stored in the temporal storage 17 and the enrollment feature having achieved the success of the comparison in Step S34 to Step S35 is equal to or more than a threshold (Step S43). When it is determined as "No" in Step S43, the update unit 18 initializes the temporal storage 17 (Step S44). In concrete, the category and the feature for comparison stored in the temporal storage 17 are deleted. After that, Step S41 is executed.

When it is determined as "Yes" in Step S43, the update unit 18 relates the enrollment feature having achieved the success of the comparison with the category stored in Step S37 (Step S45). Next, the update unit 18 deletes the category and the feature for comparison stored in the temporal storage 17 by initializing the temporal storage 17 (Step S46). Next, the update unit 18 initializes the comparison frequency of all categories to which the enrollment feature having achieved the success of the comparison (Step S47). Thus, the comparison frequency becomes zero. After that, the execution of the flowchart is terminated.

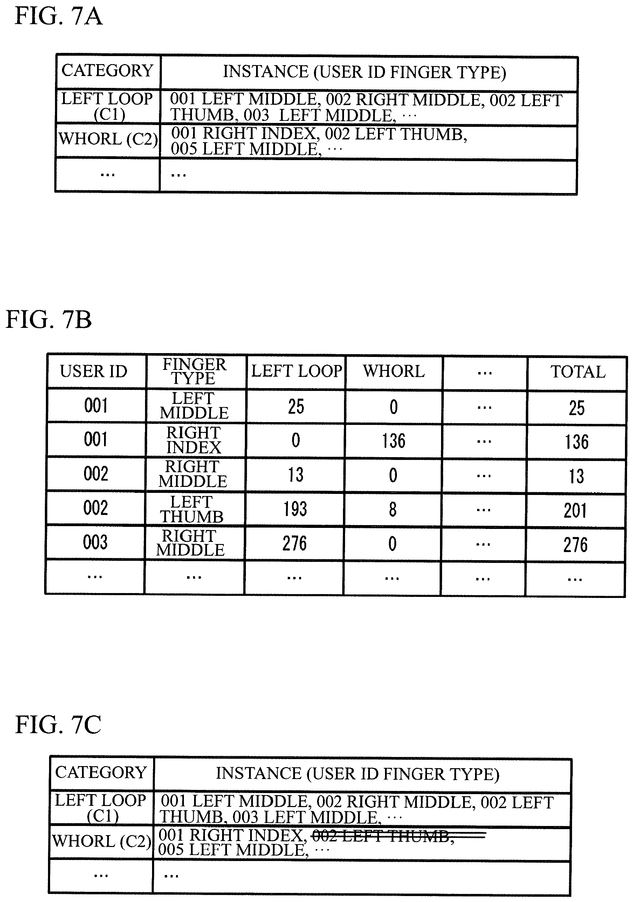

FIG. 7A illustrates a table before the enrollment feature is deleted. In the example of FIG. 7A, the enrollment feature of the left thumb of User ID 002 is associated with the category C1 and the category C2. FIG. 7B illustrates a table of the comparison frequency. As illustrated in FIG. 7B, the comparison frequency is set with respect to each category and each enrollment feature. When the first threshold is 200 and the second threshold is 20 in the flowchart of FIG. 6, the comparison frequency of the category C2 of whorl of the left thumb of user ID 002 satisfies the deletion condition. Therefore, as illustrated in FIG. 7C, the enrollment feature of the left thumb of user ID 002 is deleted from the category C2 of whorl.

In the modified embodiment, the feature for comparison extracted from the biometric information input in the biometric sensor 105 is compared with the enrollment feature of the category to which the biometric information belongs. Thus, the authentication process is speeded up, compared to the case where the feature for comparison is compared with all enrollment feature. When the feature for comparison extracted from the biometric information that is re-input in a case where the comparison is failed is successfully compared with the enrollment feature belonging to the category of the biometric information, the enrollment feature having achieved the success of the comparison is associated with the determined category. In this case, the enrollment feature to be compared belongs to the category having possibility of erroneous determination (binning error). Therefore, even if the category is erroneously determined, a time for comparing the feature for comparison with the enrollment feature to be accurately compared is reduced. That is, the authentication process is speeded up. Further, when the number of the success of the comparison increases and the sum of the comparison frequency is more than the first threshold (Step S41), the category of which comparison frequency is less than the second threshold is deleted. Therefore, unnecessary category for comparison is deleted. Accordingly, the authentication process is speeded up.

The association between a category in which a ratio of a comparison frequency with respect to the sum of the comparison frequency of all categories associated with the enrollment feature having achieved the success of the comparison is less than a threshold and the enrollment feature may be deleted. The association may be deleted when the number of all categories associated with the enrollment feature having achieved the success of the comparison is equal to or more than a threshold.

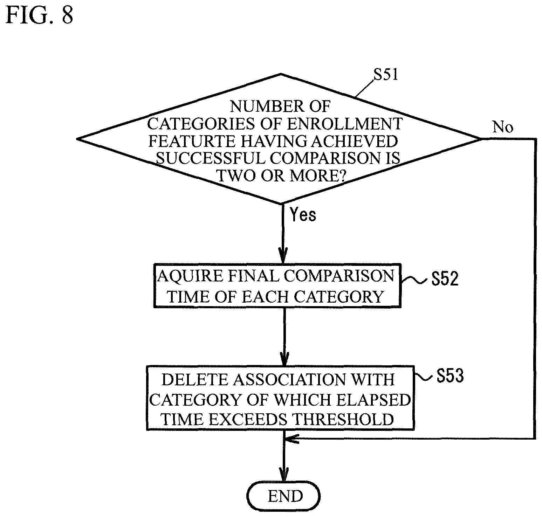

(Second modified embodiment) The comparison frequency is used in the first modified embodiment. However, an association of a category of which elapsed time from the previous comparison is long may be deleted. FIG. 8 illustrates a flowchart of an authentication process in accordance with a second modified embodiment. The flowchart of FIG. 8 is performed after the execution of Step S16 of FIG. 4. As illustrated in FIG. 8, the update unit 18 determines whether there are a plurality of categories associated with the enrollment feature having achieved the success of the comparison (Step S51). When it is determined as "Yes" in Step S51, the update unit 18 acquires an elapsed time by acquiring time at which each category becomes object of comparison with respect to the enrollment feature (Step S52). The update unit 18 deletes the association between the category of which elapsed time is more than a threshold and the enrollment feature (Step S53). After Step S53, or when it is determined as "No" in Step S51, the flowchart is terminated. In the modified embodiment, unnecessary category is deleted. Therefore, the authentication process is speeded up.

The association between the category associated with the enrollment feature having achieved the success of the comparison, of which elapsed time is the longest, and the enrollment feature may be deleted. The association may be deleted under a condition that the number of categories associated with the enrollment feature having achieved the success of the comparison is equal to or more than a threshold.

In the above-mentioned embodiments, palm prints such as the left loop or the whorl are used as the categories of fingerprint. However, the categories are not limited. For example, a width of a ridge line of the fingerprint, a distance between ridge lines may be used as the category. Alternately, when a vein pattern is used as biometric information, a size of a palm, the number of branches of vein, a width of a vein or the like may be used as the category. When a face is used as biometric information, a distance between irises, a distance between a nose and an iris, the number of moles may be used as the category.

In the above-mentioned embodiments, the storage 15 acts as an example of a storage configured to store enrollment biometric information associated with a category having a relation with a feature of biometric information. The determiner 14 acts as an example of a determiner configured to determine the category of biometric information input in a biometric sensor. The comparer 16 acts as an example of a comparer configured to compare input biometric information input in the biometric sensor with each enrollment biometric information that is associated with a category determined by the determiner with respect to the input biometric information and stored in the storage. The update unit 18 acts as an example of an associator configured to, when a first comparison by the comparer between the input biometric information and the each enrollment biometric information is failed and a second comparison by the comparer between each enrollment biometric information that is associated with a category determined by the determiner with respect to re-input biometric information re-input in the biometric sensor and is stored in the storage and the re-input biometric information is succeeded, associate the each enrollment biometric information having achieved a success of the second comparison with the category determined with respect to the input biometric information.

## Claims

1. A biometric authentication device comprising:
a storage configured to store enrollment biometric information associated with a category having a relation with a feature of biometric information;
a determiner configured to determine the category of biometric information input in a biometric sensor;
a comparer configured to compare input biometric information input in the biometric sensor with each enrollment biometric information that is associated with a category determined by the determiner with respect to the input biometric information and stored in the storage; and
an associator configured to, when a first comparison by the comparer between the input biometric information and the each enrollment biometric information is failed and a second comparison by the comparer between each enrollment biometric information that is associated with a category determined by the determiner with respect to re-input biometric information re-input in the biometric sensor and is stored in the storage and the re-input biometric information is succeeded, associate the each enrollment biometric information having achieved a success of the second comparison with the category determined with respect to the input biometric information.

2. The biometric authentication device as claimed in claim 1, wherein the associator stores a comparison frequency of the category associated with the enrollment biometric information having achieved the success of the comparison , and delete an association between a category of which comparison frequency is less than a second threshold and the enrollment biometric information having achieved the success of the comparison when a sum of comparison frequency of each category is equal to or more than a first threshold.

3. The biometric authentication device as claimed in claim 1, wherein the associator stores a comparison frequency of the category associated with the enrollment biometric information having achieved the success of the comparison, and delete an association between a category of which ratio of a comparison frequency with respect to a sum of comparison frequency of each category is less than a threshold and the enrollment biometric information having achieved the success of the comparison.

4. The biometric authentication device as claimed in claim 1, wherein the associator deletes an association between a category of which elapsed time from the previous comparison with the enrollment biometric information having achieved the success of the comparison and the enrollment biometric information, among categories associated with the enrollment biometric information having achieved the success of the comparison.

5. The biometric authentication device as claimed in any of claims 1 to 4,
wherein the associator does not associate the enrollment biometric information having achieved the success of the second comparison and the category determined with respect to the input biometric information when a similarity between the enrollment biometric information having achieved the success of the second comparison and the input biometric information is not more than a threshold.

6. The biometric authentication device as claimed in any of claims 1 to 5,
wherein a modality of the biometric information is fingerprint.

7. A biometric authentication method comprising:
storing enrollment biometric information in a storage, the enrollment biometric information being associated with a category having a relation with a feature of biometric information;
determining the category of biometric information input in a biometric sensor;
comparing input biometric information input in the biometric sensor with each enrollment biometric information that is associated with a category determined in the determining with respect to the input biometric information and stored in the storage; and
associating, when a first comparison between the input biometric information and the each enrollment biometric information is failed and a second comparison between each enrollment biometric information that is associated with a category determined in the determining with respect to re-input biometric information re-input in the biometric sensor and is stored in the storage and the re-input biometric information is succeeded, the each enrollment biometric information having achieved a success of the second comparison with the category determined with respect to the input biometric information.

8. The biometric authentication method as claimed in claim 7, further comprising:
storing a comparison frequency of the category associated with the enrollment biometric information having achieved the success of the comparison; and
deleting an association between a category of which comparison frequency is less than a second threshold and the enrollment biometric information having achieved the success of the comparison when a sum of comparison frequency of each category is equal to or more than a first threshold.

9. The biometric authentication method as claimed in claim 7, further comprising:
storing a comparison frequency of the category associated with the enrollment biometric information having achieved the success of the comparison; and
deleting an association between a category of which ratio of a comparison frequency with respect to a sum of comparison frequency of each category is less than a threshold and the enrollment biometric information having achieved the success of the comparison.

10. The biometric authentication method as claimed in claim 7, further comprising:
deleting an association between a category of which elapsed time from the previous comparison with the enrollment biometric information having achieved the success of the comparison and the enrollment biometric information, among categories associated with the enrollment biometric information having achieved the success of the comparison.

11. The biometric authentication method as claimed in any of claims 7 to 10,
wherein, in the associating, the enrollment biometric information having achieved the success of the second comparison is not associated with the category determined with respect to the input biometric information when a similarity between the enrollment biometric information having achieved the success of the second comparison and the input biometric information is not more than a threshold.

12. The biometric authentication method as claimed in any of claims 7 to 11,
wherein a modality of the biometric information is fingerprint.

13. A biometric authentication program causing a computer to execute a process, the process comprising:
storing enrollment biometric information in a storage, the enrollment biometric information being associated with a category having a relation with a feature of biometric information;
determining the category of biometric information input in a biometric sensor;
comparing input biometric information input in the biometric sensor with each enrollment biometric information that is associated with a category determined in the determining with respect to the input biometric information and stored in the storage; and
associating, when a first comparison between the input biometric information and the each enrollment biometric information is failed and a second comparison between each enrollment biometric information that is associated with a category determined in the determining with respect to re-input biometric information re-input in the biometric sensor and is stored in the storage and the re-input biometric information is succeeded, the each enrollment biometric information having achieved a success of the second comparison with the category determined with respect to the input biometric information.

14. The biometric authentication program as claimed in claim 13, wherein
the process further comprises:
storing a comparison frequency of the category associated with the enrollment biometric information having achieved the success of the comparison; and
deleting an association between a category of which comparison frequency is less than a second threshold and the enrollment biometric information having achieved the success of the comparison when a sum of comparison frequency of each category is equal to or more than a first threshold.

15. The biometric authentication program as claimed in claim 13, wherein
the process further comprises:
storing a comparison frequency of the category associated with the enrollment biometric information having achieved the success of the comparison; and
deleting an association between a category of which ratio of a comparison frequency with respect to a sum of comparison frequency of each category is less than a threshold and the enrollment biometric information having achieved the success of the comparison.
